# EUROPEAN PATENT APPLICATION

(11) **EP 4 640 528 A1**
(43) Date of publication of application: **29.10.2025**
(21) Application number: 23907630.0
(22) Date of filing: 15.12.2023
(51) Int. Cl.: B62D 21/15, H01M 50/249, B60K 1/04, B62D 25/02, B62D 29/00

(54) **FRAME FOR ELECTRIC VEHICLE**

(30) Priority: 21.12.2022 KR 20220180052
(71) Applicant: POSCO Co., Ltd, Pohang-si, Gyeongsangbuk-do 37859 (KR)
(72) Inventor: LEE, Gyu-Min, Incheon 21985 (KR); LEE, Hong-Woo, Incheon 21985 (KR); KIM, Jaehyun, Incheon 21985 (KR); KIM, Hwi-Geon, Incheon 21985 (KR)
(74) Representative: Meissner Bolte Partnerschaft mbB
(86) International application number: PCT/KR2023/020813
(87) International publication number: WO 2024/136345

(57) **Abstract**

The present invention relates to a frame for an electric vehicle. The frame for an electric vehicle, according to an embodiment of the present invention, having defined therein a battery space in which batteries are located, comprises: a side frame which is located at a part of the periphery of the battery space, includes a first hollow portion having a closed section, and extends in a first direction that is the lengthwise direction of the vehicle; and a reinforcement portion which is located in the first hollow portion and has a surface formed in a second direction that is the width direction of the vehicle.

## Description

### Technical Field

The present disclosure relates to a frame for an electric vehicle, and more particularly, to a frame for an electric vehicle of a body-on-frame type electric vehicle in which a reinforcing portion is located on an inner side of a side frame.

### Background Art

As one of vehicle body structures, there is provided a body-on-frame structure in which a vehicle body is assembled on a frame and the vehicle body on the frame and the frame may be separated. A body-on-frame structure is commonly used in vehicles such as SUVs, trucks, buses, or the like. The body-on-frame structure is mainly used in vehicles that can withstand high loads or which require traction.

When the body-on-frame structure is used in an electric vehicle, the most important roles of the frame in conventional internal combustion engine vehicle were to support the overall load of the vehicle, provide rigidity, and protect passengers in the event of an external collision, but in an electric vehicle, in addition to protecting passengers, protecting a battery has also become a very important factor. The battery is located on the bottom surface, takes up a lot of volume, and also weighs a lot.

Therefore, it is difficult to protect against collisions and increase weight due to the installation of a large-capacity battery with a shape, the same as that of the body-on-frame structure used in internal combustion engine vehicles.

In addition, some automobiles use an aluminum extrusion, or the like as a reinforcing material in an internal space of the frame, but there is a problem in that this is expensive and may not be entirely environmentally friendly.

Therefore, there is a need for a structure of a frame for an electric vehicle that can solve the problems described above.

(Patent Document 1) Korean Patent Publication No. 10-2022-0122089 (published on September 2, 2022).

### Summary of Invention

### Technical Problem

An embodiment of the present disclosure is to provide a body-on-frame type frame structure having excellent shock absorption capacity for lateral impacts in a frame for an electric vehicle.

### Solution to Problem

In order to achieve the above-described purpose, in the present disclosure, provided is a frame for an electric vehicle formed as follows.

According to an embodiment of the present disclosure, provided is a frame for an electric vehicle having defined therein a battery space in which a battery is located, the frame for an electric vehicle, including: a side frame located in a portion of the periphery of the battery space, including a first hollow portion having a closed cross-section formed therein, and extending in a first direction, which is a longitudinal direction of a vehicle; and a reinforcing portion located in the first hollow portion, and including a surface formed in a second direction, which is a width direction of the vehicle.

A side sill located on one side of the side frame in the second direction, and having a second hollow portion with a closed cross-section formed therein to extend in the first direction may be included.

The reinforcing portion may include a first surface extending in the second direction, a second surface extending from the first surface in a third direction, which is a height direction of the vehicle, and a third surface extending from the second surface in the second direction, and may further include a flange formed to extend from at least one of the first surface and the third surface.

### Advantageous Effects of Invention

As set forth above, in the present disclosure, through the structure descried above, a frame structure having excellent shock absorption capacity by an external collision and excellent strength to withstand the weight of the vehicle itself may be provided.

In addition, if the reinforcing portion is formed of a material such as a steel material, rather than aluminum, there is the advantage of reasonable manufacturing costs.

### Brief description of drawings

FIG. 1 is a schematic exploded view of an electric vehicle with a body-on-frame structure.
FIG. 2 is a cross-sectional view of a portion of a structure of a frame for an electric vehicle according to an embodiment of the present disclosure, shown as A-A' in FIG. 1.
FIG. 3 is a partial perspective view of a side frame unit according to an embodiment of the present disclosure.
FIG. 4 is a partial perspective view of a side frame unit according to another embodiment of the present disclosure.
FIG. 5 is a perspective view of a side sill unit according to an embodiment of the present disclosure.
FIG. 6 is a perspective view of a side sill unit according to another embodiment of the present disclosure.
FIG. 7 is a perspective view of a side sill unit according to another embodiment of the present disclosure.
FIG. 8 is a partial perspective view of a conventional side frame, (a) with a cross-section thereof closed, and (b) with a cross-section thereof open.
FIG. 9 is a graph of force and displacement for support strength comparing when an external impact is applied in the case of a conventional side frame (A) and in the case of a side frame unit according to an embodiment of the present invention (B).

### Mode for Invention

Hereinafter, specific embodiments of the present disclosure will be described with reference to the attached drawings. However, the spirit of the present disclosure is not limited to the presented embodiments, and other regressive inventions or other embodiments included in the spirit of the present disclosure may be easily suggested by a person skilled in the art who understands the spirit of the present disclosure by adding, changing, or deleting other components within the scope of the same spirit, but it will also be said to be included within the scope of the present disclosure.

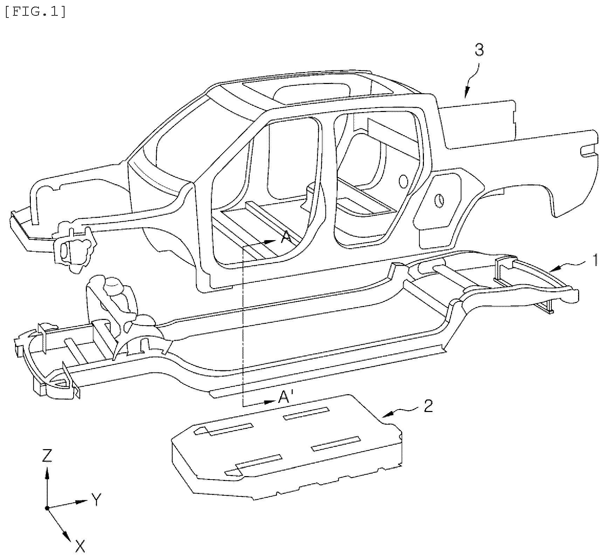

FIG. 1 schematically illustrates a structure of an electric vehicle, which is a body-on-frame structure.

An electric vehicle having a body-on-frame structure has a frame 1 and a body 3 assembled on the frame. Since it is an electric vehicle, a battery 2 is located on the inside of the frame 1 and occupies a large area.

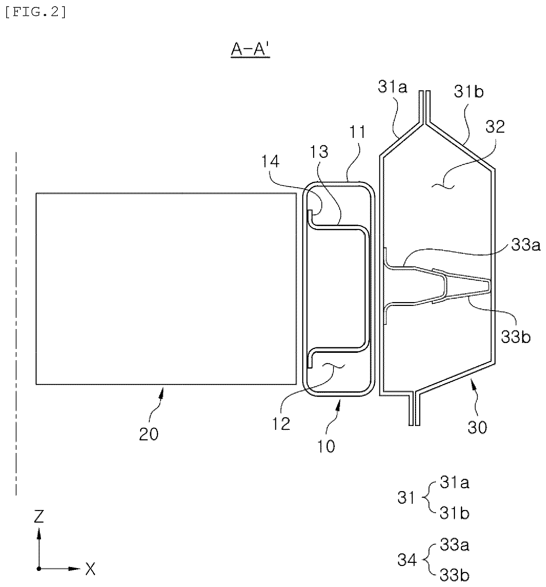

FIG. 2 is a cross-sectional view illustrating a structure of a frame for an electric vehicle according to an embodiment of the present disclosure, and is a cross-sectional view of portion A-A' in a state in which the electric vehicle body, frame, and battery of FIG. 1 are assembled.

Referring to FIG. 2, the frame for an electric vehicle according to an embodiment of the present disclosure includes a side frame unit 10 including a side frame 11 and a reinforcing portion 13.

A battery space 20 in which a battery is located may be defined. The space in which the battery is located is not shown in a specific form in FIG. 2, but is arbitrarily illustrated to show a location at which the battery exists.

The side frame 11 may be located in a portion of the periphery of the battery space 20, have a first hollow portion 12 with a closed cross-section formed therein, and extend in a first direction, which is a longitudinal direction (Y-direction) of a vehicle.

The side frame 11 may be formed to extend in a first direction, which is a longitudinal direction of the vehicle, of a portion of the periphery of the battery space 20. A cross-sectional shape of the side frame 11 in a second direction, which is a width direction (X-direction) of the vehicle, may have a first hollow portion 12, with a closed cross-section formed therein. As an example, the cross-sectional shape may be a polygon, and corners thereof may be rounded. However, an embodiment of the present disclosure is not limited to the shapes mentioned.

As an example, the side frame 11 may be formed of aluminum or a steel material. The side frame 11 may be formed of aluminum and a steel material to have the weight and support strength required for use in an electric vehicle. When the side frame 11 is formed of a steel material, it may be more advantageous in terms of costs. However, the material of the side frame 11 is not limited to the materials mentioned above, and includes all materials that would be commonly known for use in the related art by ordinarily skilled technicians.

The reinforcing portion 13 is located in the first hollow portion 12, and may include a surface formed in a second direction, which is a width direction of the vehicle.

The reinforcing portion 13 is located in the first hollow portion 12 located on the inside of the side frame 11 and, when an impact occurs from the outside of the vehicle, the reinforcing portion 13 is configured to prevent the side frame 11 from being deformed and the battery space 20 located therein from being deformed as much as possible. A reinforcing portion 13 is further provided, in addition to the side frame 11 in the side frame unit 10, thereby providing an excellent effect of energy absorption capacity due to external impacts.

The reinforcing portion 13 may be formed by bending a single plate. The reinforcing portion is formed by bending, making it easy to process, and by minimizing a joint area, a problem such as separation due to impacts may be prevented. The plate forming the reinforcing portion 13 may be a steel material having a tensile strength of 980 MPa or more. In order to have sufficient absorption capacity against external impacts, the reinforcing portion 13 may be formed of a steel material having a tensile strength of 980 MPa or more. However, an embodiment thereof is not limited to the materials and processing methods described above.

As an example, the side frame 11 and the reinforcing portion 13 may be formed of different materials. The side frame 11 and the reinforcing portion 13 may be formed of aluminum or a steel material, and may also be formed by processing different materials. The purpose of the side frame 11 is to provide a characteristic of supporting during a collision, and the reinforcing portion 13 may be required to have a characteristic of absorbing energy in addition to supporting during a collision. Therefore, when side frame 11 and the reinforcing portion 13 are formed of different materials, it may provide an effect which enables a dual design to satisfy different required characteristics.

However, the side frame 11 and the reinforcing portion 13 may be formed of the same material and are not limited to being formed of different materials.

The frame for an electric vehicle according to an embodiment of the present disclosure may further include a side sill 31.

The side sill 31 is located on one side of the side frame 11 in the second direction, and may have a second hollow portion 32, with a closed cross-section formed therein to extend in the first direction.

The side sill 31 is located on the body 3 (see FIG. 1), and may be located on one side of the side frame 11 in a second direction. As an example, the side sill 31 may be located close to the outside of the vehicle in the second direction of the side frame 11. That is, when looking at the overall structure of the vehicle, a battery 2 (see FIG. 1) may be provided on the innermost side in the second direction, then a side frame unit 10 may be provided, and then a side sill 31 may be provided. The side sill 31 may have a closed cross-section formed therein, and a second hollow portion 32 may be formed. Such a cross-sectional shape is formed to extend in the first direction. For example, the closed cross-section may be formed as a polygon, but an embodiment thereof is not limited thereto, and may be a circular pipe shape, or a complex cross-section with a plurality of closed cross-sections.

In addition, a reinforcing portion 33 including a bent or curved shape may be located in the second hollow portion 32. As an example, the reinforcing portion 33 may be configured to include a first reinforcing portion 33a and a second reinforcing portion 33b, but an embodiment thereof is not limited thereto, and may include all shapes, materials, etc., which help protect the battery and passengers from external force in the second direction.

In addition, it may be defined as a side sill unit 30 including a side sill 31 and a reinforcing portion 33. The side sill unit 30 may provide an effect of more effectively absorbing energy from lateral impacts.

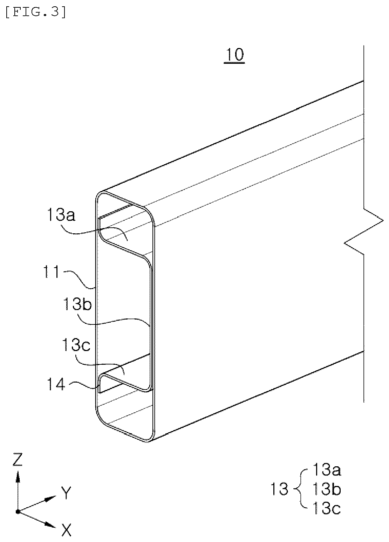

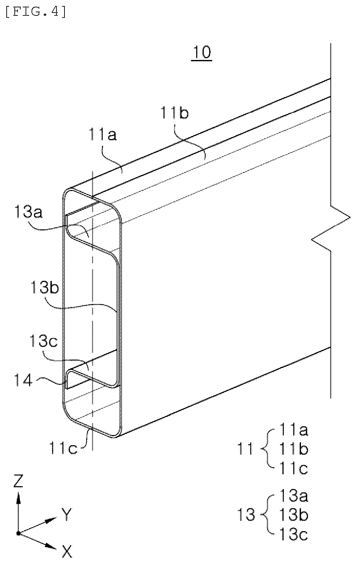

FIGS. 3 and 4 are perspective views illustrating a side frame unit according to an embodiment of the present disclosure. Since the side frame unit is formed to extend in a first direction, only a portion thereof is illustrated.

Referring to FIGS. 3 and 4, as an example, a reinforcing portion 13 may be formed to include a first surface 13a extending in the second direction, a second surface 13b extending from the first surface 13a in a third direction, which is a height direction (Z direction) of the vehicle, and a third surface 13c extending from the second surface 13b in the second direction.

The reinforcing portion 13 may be formed to include at least two bent portions or rounded corner portions, and to have three surfaces: a first surface 13a, a second surface 13b, and a third surface 13c.

The first surface 13a and the third surface 13c may be formed symmetrically with respect to the second surface 13b. In addition, the first to third surfaces 13a, 13b, and 13c may be formed at a predetermined angle rather than being vertical or horizontal with respect to the first direction or the second direction.

In addition, the reinforcing portion 13 may further include a flange 14 formed by extending from at least one of the first surface 13a and the third surface 13c. When the flange 14 is formed and the reinforcing portion 13 and the side frame 11 are fixed, the reinforcing portion 13 and the side frame 11 are fixed by surface contact, a more stable fixing effect can be provided as compared to a case in which there is no flange 14. When the reinforcing portion 13 is processed and integrally formed of a plate material, the flange 14 may also be bent and formed and integrally formed. However, the shape and processing method of the flange 14 are not limited to the above-mentioned example.

The side frame 11 may include a first side frame 11a and a second side frame 11b. The side frame 11 includes a first side frame 11a adjacent to the battery space 20 and a second side frame 11b combined with the first side frame 11a. The second side frame 11b may be adjacent to the side sill 31. The side frame 11b may be formed by coupling the first side frame 11a and the second side frame 11b.

As an example, when the side frame 11 is formed of a material such as aluminum, the side frame 11 may be formed by extrusion, and thus may be integrally formed, as shown in FIG. 3. However, when formed of a material such as a steel material, as shown in FIG. 4, the side frame may be formed by bending a plate, or may be manufactured separately as a first side frame 11a and a second side frame 11b and then manufactured as a joint portion 11c which is joined at one end or both ends of the first side frame 11a and the second side frame 11b, which may be advantageous in processing due to the nature of the material.

In addition, as an example, the reinforcing portion 13 located in the first hollow portion 12 of the side frame 11 may be formed so that the second surface 13b of the reinforcing portion 13 is in contact with an inner surface of the second side frame 11b, in terms of a positional relationship with the side frame 11. The second surface 13b of the reinforcing portion 13 may be in contact with the inner surface of the second side frame 11b. When an impact is applied in the second direction, an external impact transmitted from the side sill 31 through the contact surface is directly transmitted to the reinforcing portion 13 through the second side frame 11b, thereby effectively absorbing the impact.

However, the second side frame 11b and the second surface 13b may not be located to be in contact with each other and are not limited to the positional relationship described above.

In addition, when the first surface 13a of the reinforcing portion 13 has one end connected to the second surface 13b, and the third surface 13c has one end connected to the second surface 13b, at least one of the other end of the first surface 13a, the other end of the third surface 13c, or the flange 14 may be configured to include a joint portion fixed to the first side frame 11a. The joint portion may be a joint formed by arc welding or a structural adhesive. In addition, a joint portion may also be included at the point in which the second side frame 11b and the second surface 13b is in contact.

As an example, the combination between the second side frame 11b and the second surface 13b may be performed using either a structural adhesive or arc welding, and in the case of a joint portion where at least one of the other end of the first surface 13a, the other end of the third surface 13c, or the flange is fixed to the first side frame 11a, a joint portion may be formed by arc welding.

However, without being limited to the method described above, a joint portion where at least one of the other end of the first surface 13a, the other end of the third surface 13c, or the flange 14 is fixed to the first side frame 11 may be formed by a structural adhesive, or may be fixed by fastening using a bolt, or the like.

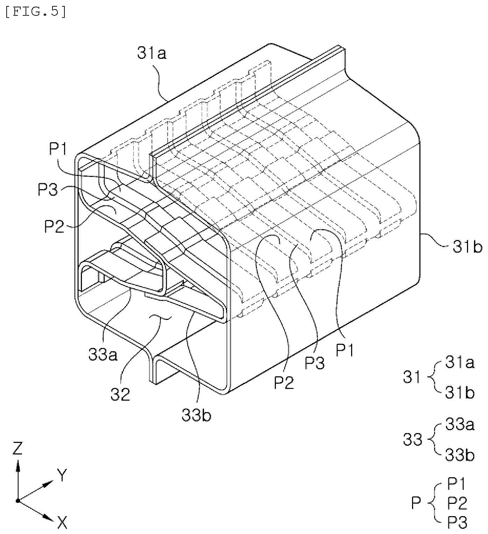

FIGS. 5 to 7 illustrate perspective views of a side sill unit according to an embodiment of the present disclosure. The side sill unit is formed to extend in a first direction, but is illustrated briefly in this figure.

A side sill unit 30 may include a side sill 31 and a reinforcing portion 33, as described above.

The side sill 31 may include a first side sill 31a, a second side sill 31b combined with the first side sill 31a to form a second hollow portion 32, together with the first side sill 31a, and a side sill flange portion, which is a position at which the first side sill 31a and the second side sill 31b are joined.

The reinforcing portion 33 includes a bent or curved shape, is located in the second hollow portion 32, is formed to be continuous in the first direction, and to be in contact with at least a portion of the first side sill 31a.

As an example, referring to FIG. 5, a first reinforcing portion 33a and a second reinforcing portion 33b may be formed, and the first reinforcing portion 33a may be disposed in the second hollow portion 32, and one side thereof may be joined to the first side sill 31a to form a first closed cross-section. The first reinforcing member 33a may be joined to the first side sill 31a to form a first closed cross-section, thereby improving the mechanical rigidity of the vehicle side sill 31.

The first reinforcing portion 33a may include a first upper portion, a pair of first side portions, and a pair of first lower flanges.

A first side portion may be connected to both ends of the first upper portion in the height direction, respectively. The first upper portion may have a curved shape in a first direction. A protruding surface P1 and an indented surface P2 may be alternately formed in the first direction, and an inclined surface P3 may be formed between the protruding surface P1 and the indented surface P2.

The first side portion may be formed to extend from the first upper portion and to contact an inner surface of the first side sill 31a. The first reinforcing portion 33a may be bent and formed so that the first side portion and the first lower flange are disposed to intersect each other.

The first lower flange may be joined to the inner surface of the first side sill 31a.

A second reinforcing portion 33b may be disposed in the second hollow portion 32, and one side thereof may be joined to the first reinforcing portion 33a to form a second closed cross-section, thereby improving the mechanical rigidity of the vehicle side sill.

The second reinforcing portion 33b may include a second upper portion, a pair of second side portions, and a pair of second lower flanges.

The second upper portion may have a curved shape in a first direction. A protruding surface P1 and an indented surface P2 may be alternately formed in the first direction, and an inclined surface P3 may be formed between the protruding surface P1 and the indented surface P2. The second upper portion may be planar. Accordingly, when an adhesive, or the like is applied to the second upper portion for adhesion to the second side sill 31b, the adhesive strength of the second upper portion may be improved, and the convenience of adhesion and assembly work may be improved.

A second side portion may be connected to both ends of the second upper portion in the height direction, respectively.

The second side portion may be extended from the second upper portion, and formed to extend in a second direction to the first side sill 31a. The second lower flange of the second reinforcing portion 33b may be joined to the first side portion of the first reinforcing portion 33a.

The second lower flange may have a step portion formed between the second lower flange and the second side portion.

The first reinforcing portion 33a and the second reinforcing portion 33b may include an unevenness portion P formed continuously in the first direction. For example, the first reinforcing portion 33a and the second reinforcing portion 33b may have an unevenness portion P formed continuously over the entire side sill 31 in the first direction.

By including the unevenness portion P, the rigidity may be improved without increasing a thickness of a material such as a steel material forming the first reinforcing portion 33a and the second reinforcing portion 33b.

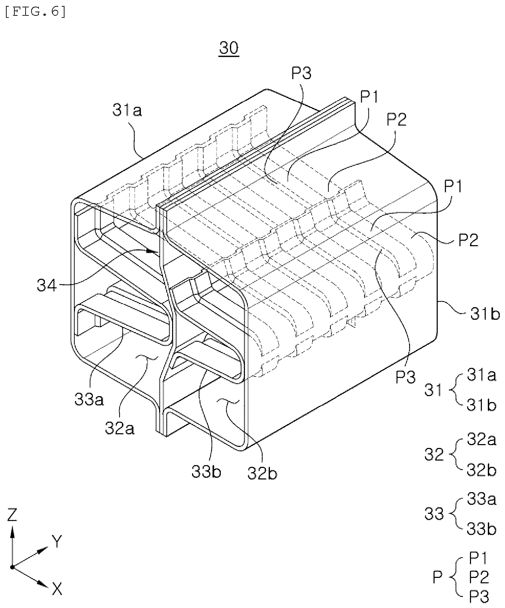

As another example, referring to FIG. 6, in addition to the first reinforcing portion 33a and the second reinforcing portion 33b, a diaphragm member 34 may be further included. When the diaphragm member 34 is formed, the diaphragm member 34 is formed to divide the second hollow portion 32, and is formed so that the first side sill 31a and the second side sill 31b may be stably compressed and deformed by an external impact in the second direction. Therefore, the energy absorption capacity due to collision energy is further improved. The diaphragm member 34 may be located to be in contact with the first upper portion of the first reinforcing portion 33a and the second lower flange of the second reinforcing portion 33b. A curved shape in the second direction may be further added in the central portion. Since there is such a curved shape, crushing deformation due to impacts can be advantageous.

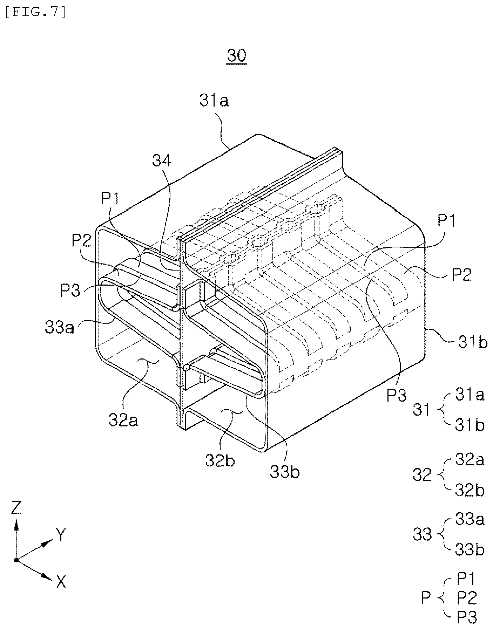

As another example, referring to FIG. 7, the first reinforcing portion 33a and the second reinforcing portion 33b may be formed symmetrically with the diaphragm member 34 therebetween. Therefore, the first lower flange of the first reinforcing portion 33a and the second lower flange of the second reinforcing portion 33b may be formed while being in contact with the diaphragm member 34.

The shape and structure of the reinforcing portion 33 are examples, and are not limited to the above-described examples.

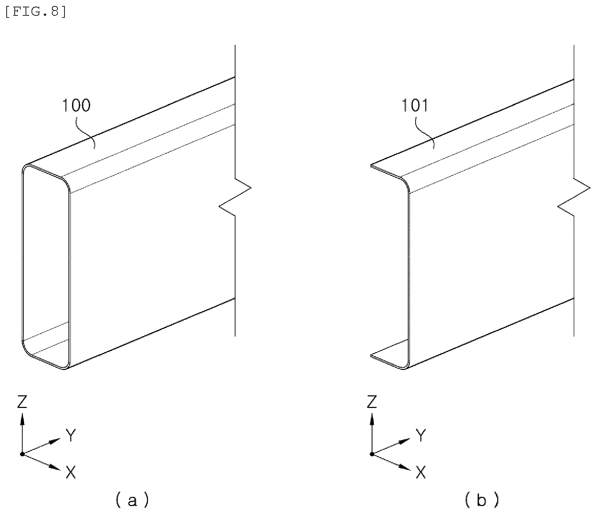

FIG. 8 is a perspective view illustrating a conventional side frame, (a) illustrating a case in which a closed cross-section is formed, and (b) illustrating a case in which an open cross-section is formed.

The conventional side frames 100 and 101 did not include a reinforcing portion 13 (see FIG. 2), and therefore, the side frame was easily deformed due to a collision in a second direction, making it difficult to protect a battery of an electric vehicle or passengers.

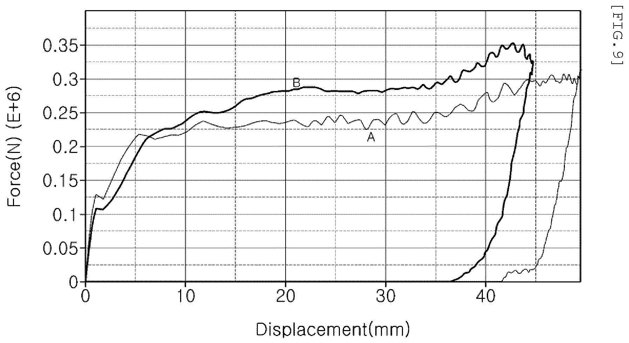

FIG. 9 is a graph illustrating deformation for a collision in a second direction in the case of having a conventional side frame 100 (see (a) of FIG. 8) and a side frame unit 10 (see FIG. 3) according to an embodiment of the present disclosure. A result value for the conventional side frame is represented by B, and a result value for the side frame unit according to an embodiment of the present disclosure is represented by A.

A shape of the conventional side frame 100 is as shown in (a) of FIG. 8, and in the case of the present disclosure, it is a result value interpreted based on the side frame unit 10 of the shape shown in FIG. 3. A weight of the conventional side frame 100 and a weight of the side frame unit 10 according to an embodiment of the present disclosure are the same. To this end, a thickness of the side frame 100 was adjusted.

A support strength may be compared based on a point at which rapid deformation occurs. As a result of the interpretation, according to a result graph (B) of the conventional side frame 100, an external impact may be supported up to 307.4 KN, and the deformation at this time is 49.3 mm. According to a result graph (A) of the side frame unit 10 according to an embodiment of the present disclosure, it can be seen that an external impact of up to 351.4 KN may be supported, and the deformation at this time is 47.8 mm. Therefore, it can be seen that in the case of the present disclosure, it can be supported an external impact of up to 351.4KN may be supported, and the deformation at this time is 47.8mm. Therefore, it can be seen that in the case of the present disclosure, the amount of deformation is minimized in the case of an impact in the second direction from the outside of the vehicle, while supporting a greater force. That is, it can be seen that the energy absorption capacity of the side frame unit 10 in an embodiment of the present disclosure is increased compared to the conventional side frame 100, thereby providing an effect of increase support strength and reduced deformation. Thereby, it is possible to provide a safe vehicle by protecting the passengers and the battery.

While example embodiments have been illustrated and described above, it will be apparent to those skilled in the art that modifications and variations could be made without departing from the scope of the present disclosure as defined by the appended claims.

**Description of Reference Numerals**

| | | | |
|---|---|---|---|
| 1: | Frame | 2: | Battery |
| 3: | Body | | |
| 10: | Side frame unit | 11: | Side frame |
| 12: | First hollow portion | 13: | Reinforcing portion |
| 13a: | First surface | 13b: | Second surface |
| 13c: | Third surface | 14: | Flange |
| 20: | Battery space | | |
| 30: | Side sill unit | 31: | Side sill |
| 31a: | First side sill | 31b: | Second side sill |
| 32: | Second hollow portion | 33: | Reinforcing portion |
| 34: | Diaphragm member | | |
| 100, 101: | Existing side frame | | |

## Claims

1. Provided is a frame for an electric vehicle having defined therein a battery space in which a battery is located, the frame for an electric vehicle, comprising:
a side frame located in a portion of the periphery of the battery space, including a first hollow portion having a closed cross-section formed therein, and extending in a first direction, which is a longitudinal direction of a vehicle; and
a reinforcing portion located in the first hollow portion, and including a surface formed in a second direction, which is a width direction of the vehicle.

2. The frame for an electric vehicle of claim 1, wherein the reinforcing portion comprises a first surface extending in the second direction, a second surface extending from the first surface and extending in a third direction, which is a height direction of the vehicle, and a third surface extending from the second surface in the second direction.

3. The frame for an electric vehicle of claim 2, wherein the reinforcing portion further comprises a flange formed to extend from at least one of the first surface and the third surface.

4. The frame for an electric vehicle of claim 2 or 3, wherein the side frame comprises a first side frame adjacent to the battery space and a second side frame combined with the first side frame.

5. The frame for an electric vehicle of claim 4, wherein the second surface of the reinforcing portion is formed to be in contact with an inner surface of the second side frame.

6. The frame for an electric vehicle of claim 4, wherein the first surface has one end connected to the second surface, and the third surface has one end connected to the second surface, and
at least one of the other end of the first surface, the other end of the third surface, or the flange includes a joint portion fixed to the first side frame.

7. The frame for an electric vehicle of claim 2, wherein the reinforcing portion is formed by bending a single plate.

8. The frame for an electric vehicle of claim 7, wherein the plate material is a steel material having a tensile strength of 980 MPa or more.

9. The frame for an electric vehicle of claim 1, further comprising:
a side sill located on one side of the side frame in the second direction, and having a second hollow portion with a closed cross-section formed therein to extend in the first direction.

10. The frame for an electric vehicle of claim 9, wherein the side sill comprises a first side sill and a second side sill combined with the first side sill to form a second hollow portion together with the first side sill, and
a reinforcing portion having a bent or curved shape, and located in the second hollow portion and continuous in the first direction and at least partly in contact with the first side sill.

11. The frame for an electric vehicle of claim 1, wherein the side frame is formed of aluminum or a steel material.

12. The frame for an electric vehicle of claim 1, wherein the side frame and the reinforcing portion are formed of different materials.
